# EUROPÄISCHE PATENTSCHRIFT

(11) **EP 0 635 831 B1**
(45) Veröffentlichungstag und Bekanntmachung des Hinweises auf die Patenterteilung: **09.12.1998**
(21) Anmeldenummer: 94107702.6
(22) Anmeldetag: 18.05.1994
(51) Int. Cl.: G11B 23/023

(54) **Kassettenhalterung für in Längsrichtung einschiebbare Magnetbandkassette**
Cassette holding means for a magnetic tape cassette which is introduced length wise
Moyens de retenue pour une cassette à bande magnétique qui est introduite en longeur

(30) Priorität: 20.07.1993 DE 4324265
(43) Veröffentlichungstag der Anmeldung: 25.01.1995
(73) Patentinhaber: fischerwerke Artur Fischer GmbH & Co. KG, D-72178 Waldachtal (DE)
(72) Erfinder: Torsten, Bieck Dipl.-Ing., D-72178 Waldachtal (DE)

(56) Entgegenhaltungen:
- EP-A- 0 538 585
- DE-A- 3 307 451
- DE-U- 8 808 652
- US-A- 4 216 857

## Beschreibung

Die Erfindung betrifft eine Kassettenhalterung für in Längsrichtung einschiebbare Magnetbandkassetten gemäß Oberbegriff des Anspruchs 1.

Zur Aufbewahrung von Magnetbandkassetten sind Behälter bekannt, die mehrere Einschuböffnungen für den Längseinschub von Magnetbandkassetten haben. In der eingeschobenen Stellung rastet ein die Magnetbandkassette aufnehmender Schieber ein, so daß die Magnetbandkassette vollständig vom Behälter und einer Verschlußklappe umschlossen ist. Die Entnahme der eingeschobenen Magnetbandkassette erfolgt nun dadurch, daß der Schieber entriegelt wird und eine Feder diesen zusammen mit der darauf abgelegten Magnetbandkassette in eine Entnahmeposition verschiebt. In der Entnahmeposition ragt die Magnetbandkassette aus der Einschuböffnung heraus und kann bequem entnommen werden.

Ein derartiger Behälter mit mehreren Einschuböffnungen und mehreren Schiebern, die jeweils eine Magnetbandkassette aufnehmen können, ist aus der EP 0 538 585 A2 bekannt. Den einzelnen Einschuböffnungen sind Aufnahmeräume für den Längseinschub von Magnetbandkassetten zugeordnet. In jedem Aufnahmeraum ist auf einer Bodenplatte ein verriegelbarer Schieber gelagert, an dem in die Spulennaben der Magnetbandkassetten eingreifende und in Einschubrichtung fluchtende Arretiereinrichtungen angeordnet sind. Die Arretiereinrichtungen haben den Zweck, daß sich die Spulen nicht unbeabsichtigt drehen können. Eine solche Kassettenhalterung mit Spulenarretierung ist insbesondere bei der Aufbewahrung von Magnetbandkassetten in Kraftfahrzeugen wichtig, da die dort auftretenden Erschütterungen sonst zu unbeabsichtigtem Verdrehen der Spulen führen könnten. Diese bekannte Kassettenhalterung besitzt im Bereich jeder Spulennabe zwei seitlich versetzte Kipphebel als Arretiereinrichtung, wobei je nach Lage der eingelegten Magnetbandkassette der linke oder der rechte Kipphebel in die Spulennabe eingreift. Bei einer eingelegten Magnetbandkassette ohne von außen zugängliche Spulennaben ist keiner der Kipphebel wirksam.

Der Erfindung liegt die Aufgabe zugrunde, eine Kassettenhalterung für in Längsrichtung einschiebbare Magnetbandkassetten zu schaffen, bei der seitlich verschiebbare Arretiereinrichtungen positionsgenau in die Spulennaben eingreifen können.

Die Lösung dieser Aufgabe erhält man durch die im Anspruch 1 angegebenen Merkmale. Die Arretiereinrichtungen sind an einem quer verschiebbaren Schiebeelement angebracht, wodurch es möglich ist, daß die Arretiereinrichtung exakt auf die Position der zugehörigen Spulennabe ausgerichtet wird. Die Ausrichtung erfolgt dabei durch den an Magnetbandkassetten beidseitig ausgebildeten Wulst, der je nach Ausrichtung der Magnetbandkassette an linksseitige oder rechtsseitige Steuerkeile des Schiebeelements drückt und dieses zusammen mit den daran angebrachten Arretiereinrichtungen in die erforderliche Position verschiebt. Am längsverschiebbaren Schieber bewirken Steuerkanten, daß die Arretiereinrichtungen bei eingeschobenem Schieber in die Arretierposition verschwenkt werden. Die seitliche Verschiebbarkeit der Arretiereinrichtungen hat insbesondere den Vorteil, daß die Arretiereinrichtungen in ihrer Breite an den Durchmesser der Spulennaben angepaßt sein können und somit an beiden Seitenrändern der Arretiereinrichtungen an den Spulennaben eingreifen.

Als Betätigungselement für die Arretiereinrichtungen kann eine zu beiden Seiten der Arretiereinrichtungen überstehende Welle vorgesehen sein, an deren beiden freien Enden Schwenkzapfen radial abstehen. Die Schwenkzapfen verändern somit ihre seitliche Position entsprechend der Positionierung des quer verschiebbaren Schiebeelements. Ist das Schiebeelement in einer Mittenposition, so sind die Schwenkzapfen der Arretiereinrichtungen wirkungslos, d. h. daß beim Einschieben einer DAT-Kassette die Arretiereinrichtungen nicht in eine Arretierposition verschwenkt werden. Bei Einschieben einer DAT-Kassette bleibt nämlich das quer verschiebbare Schiebeelement in einer Mittenposition, da an einer solchen DAT-Kassette kein Wulst übersteht, der eine seitliche Verschiebung des Schiebeelements bewirken könnte.

Das quer verschiebbare Schiebeelement befindet sich vorzugsweise in einer Aussparung der Bodenplatte der Kassettenhalterung und wird von einer am längsverschiebbaren Schieber abstehenden Auflagezunge übergriffen. An der Unterseite der Auflagezunge können sich die Steuerkanten befinden, die je nach Position des quer verschiebbaren Schiebeelements mit den Schwenkzapfen der Arretiereinrichtungen zusammenwirken. Die Auflagezunge hat somit nicht nur die Funktion das Auflageelement für eine eingelegte Magnetbandkassette zu bilden, sondern übernimmt auch die Betätigung der Arretiereinrichtungen.

Außerdem könnten am längsverschiebbaren Schieber als Schrägflächen ausgebildete Zentrierelemente vorgesehen sein, die in der Endposition des ausgefahrenen Schiebers auf die Steuerkeile des quer verschiebbaren Schiebeelements auftreffen und dieses in eine Mittelposition bringen. Dabei kann die rückwärtige Kante der Steuerkeile für die Ausrichtung des Schiebeelements in Mittelposition dienen, während die vorderen Kanten der Steuerkeile in Verbindung mit den Wulsten der Magnetbandkassetten zur Querverschiebung des Schiebeelements vorgesehen sind.

Die Kassettenhalterung ist vorzugsweise als Einschub ausgebildet, der in ein Behältergehäuse einsetzbar und mit diesem verbindbar ist. Durch die Ausbildung als Einschub ist es möglich, Behälter mit unterschiedlicher Anzahl von Aufnahmeräumen für Magnetbandkassetten auszubilden, die dann mit einer entsprechenden Anzahl von identischen Einschüben bestückt werden. Bezüglich Anzahl der Aufnahmeräume und bezüglich der äußeren Abmessungen muß lediglich das Behältergehäuse den jeweiligen Anforderungen entsprechend angepaßt sein.

Die Erfindung wird nachfolgend anhand eines in der Zeichnung dargestellten Ausführungsbeispiels näher erläutert.

Es zeigen:
Figur 1 eine Kassettenhalterung mit längsverschiebbarem Schieber und quer verschiebbarem Schiebeelement, wobei sich der Schieber in der ausgefahrenen Entnahmeposition befindet,
Figur 2 die Kassettenhalterung von Figur 1 mit einer in Aufbewahrungsposition eingeschobenen Magnetbandkassette,
Figur 3 die Kassettenhalterung von Figur 1 ohne längsverschiebbaren Schieber,
Figur 4 die Kassettenhalterung von unten in der Position gemäß Figur 2, jedoch ohne Bodenplatte und
Figur 5 die Kassettenhalterung gemäß Figur 4, jedoch bei um 180° um die Längsachse gedrehter Magnetbandkassette.

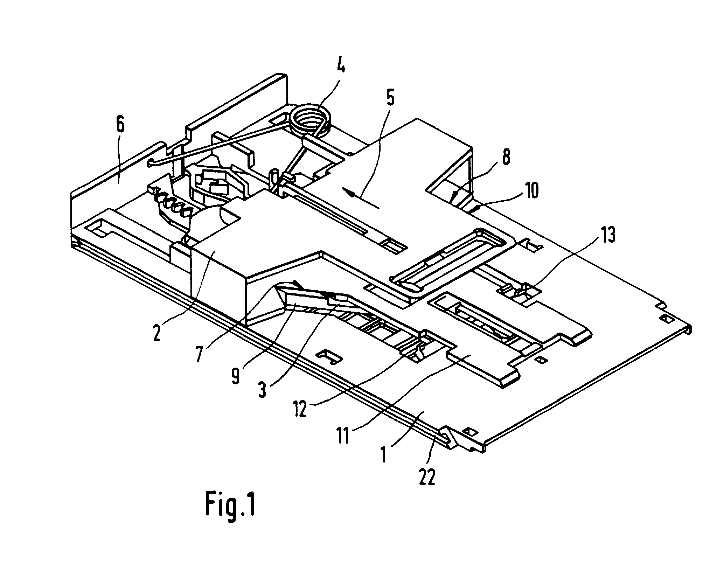

Die in Figur 1 dargestellte Kassettenhalterung ist als ein Einschub ausgebildet, der in Aufnahmeräume eines hier nicht dargestellten Behälters einsetzbar ist. Ein solcher Behälter ist aus der Eingangs genannten EP 0 538 585 A2 bekannt.

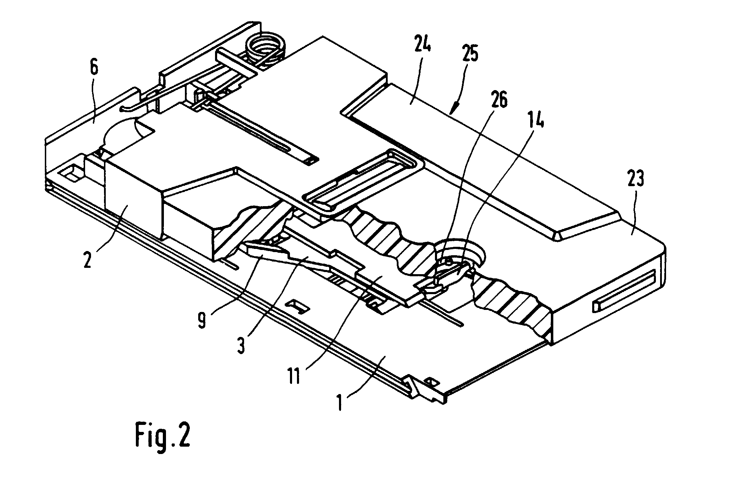

Die Kassettenhalterung besteht insbesondere aus einer Bodenplatte 1, einem längsverschiebbaren Schieber 2 und einem quer verschiebbaren Schiebeelement 3. Der Schieber 2 ist gegen die Federkraft einer Feder 4 in Pfeilrichtung 5 in Richtung Rückwand 6 einschiebbar und rastet in einer Aufbewahrungsposition, die in Figur 2 dargestellt ist, ein. In der in Figur 1 dargestellten Entnahmeposition des Schiebers 2 drückt dieser mit als Schrägflächen ausgebildeten Zentrierelementen 7, 8 auf die Rückseite von Steuerkeilen 9, 10, die am quer verschiebbaren Schiebeelement 3 nach oben abstehen. Das Schiebeelement 3 wird dadurch in die dargestellte Mittelposition gedrückt.

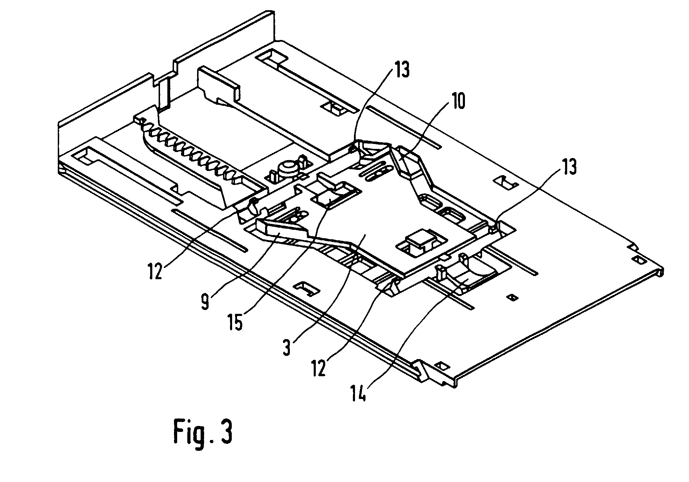

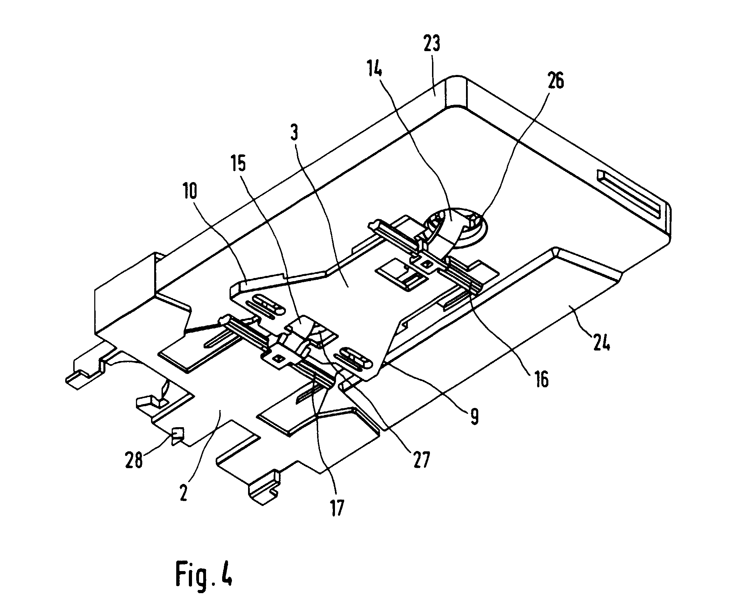

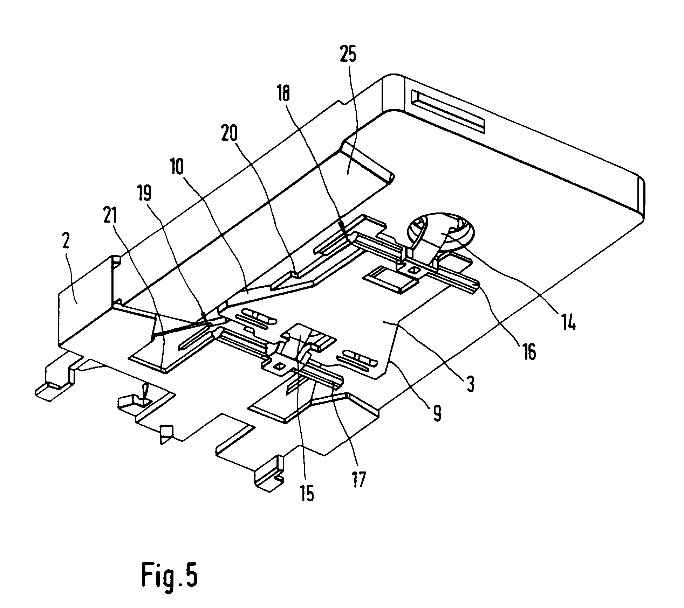

Am Schiebeelement 3 sind von einer Auflagezunge 11 des Schiebers 2 überdeckte Arretiereinrichtungen angebracht, an denen zu beiden Seiten jeweils eine Welle mit Schwenkzapfen 12, 13 übersteht. In den Figuren 2, 4 und 5 sind diese Arretiereinrichtungen 14, 15 mit Wellen 16, 17 deutlicher ersichtlich. In Figur 3 befinden sich die Arretiereinrichtungen 14, 15 in einer unteren Position, während in Figur 4 und Figur 5 sowie auch in Figur 2 die Arretiereinrichtungen 14, 15 in einer oberen Stellung, nämlich in der Arretierposition dargestellt sind.

Zur Betätigung der Arretiereinrichtungen 14, 15 sind am Schieber 2 bzw. an dessen Auflagezunge 11 an der Unterseite Steuerkanten 18, 19 sowie 20, 21 vorgesehen, die in Figur 5 ersichtlich sind. Die Steuerkanten 18, 19 dienen dabei dazu, die Arretiereinrichtungen 14, 15 in die dort dargestellte Arretierposition zu verschwenken, während die Steuerkanten 20, 21 für die Rückstellung der Arretiereinrichtungen 14, 15 in die untere Position dienen, wie diese in Figur 1 dargestellt ist.

In Figur 1 ist weiterhin ersichtlich, daß seitlich an der Bodenplatte 1 eine Seitenführung 22 angeordnet ist, die als Einrichtung zum Einschieben der Kassettenhalterung in ein Behältergehäuse dient.

Bei der in Figur 2 dargestellten Aufbewahrungsposition befindet sich die im Schieber 2 gelagerte Magnetbandkassette 23 so weit zur Rückwand 6 eingeschoben, daß die Magnetbandkassette 23 an der Vorderseite 24 praktisch nicht mehr übersteht und eine hier nicht dargestellte Gehäuse-Verschlußklappe geschlossen werden kann. Der an der Magnetbandkassette 23 nach oben und unten überstehende Wulst 24, 25 wird zur Positionierung der Arretiereinrichtungen verwendet. Beim Einschieben der Magnetbandkassette 23 drückt der untere Wulst 25 gegen den Steuerkeil 10 (Figur 1 und Figur 3) und drückt dadurch das Schiebeelement 3 in die in Figur 2 dargestellte linke Position. In Figur 5 ist diese Position von unten dargestellt, jedoch ohne Bodenplatte 1.

Die Arretiereinrichtungen 14, 15 greifen nach oben in die Spulennaben 26, 27 ein.

Wird die Kassette um ihre Längsachse um 180° verdreht in die Kassettenhalterung eingeschoben, so ergibt sich dadurch die in Figur 4 dargestellte Position, wobei das Schiebeelement 3 von dem Wulst 24 entgegengesetzt zur Darstellung von Figur 5 quer verschoben ist. Beim Einschieben der Magnetbandkassette 23 drückt der Wulst 24 das Schiebeelement 3 an dem Steuerkeil 9 seitlich aus der Mittenposition.

In Figur 4 und Figur 5 ist an der Unterseite des Schiebers 2 ein Rastelement 28 angeordnet, welches in Verbindung mit einer sogenannten Push-Push-Rasteinrichtung den Schieber 2 in der Aufbewahrungsposition hält und diesen bei erneutem Antippen der Magnetbandkassette wieder freigibt, so daß der Schieber 2 dann in die Entnahmeposition ausfährt. Die Push-Push-Rasteinrichtung ist ansich bekannt und nicht Gegenstand der vorliegenden Erfindung und daher hier auch nicht näher dargestellt.

Die Kassettenhalterung besitzt Einrichtungen, mit denen sie in ein Behältergehäuse einschiebbar und mit diesem verbindbar ist. Zu diesen Einrichtungen gehören insbesondere die Seitenführungen 22 und die Bodenplatte 1.

## Patentansprüche

1. Kassettenhalterung für in Längsrichtung einschiebbare Magnetbandkassetten, die in die Spulennaben der Magnetbandkassetten eingreifende und in Einschubrichtung fluchtende Arretiereinrichtungen und eine Bodenplatte hat, auf der ein verriegelbarer und mit einer Feder die Magnetbandkassetten in eine Entnahmeposition ausfahrbarer Schieber gelagert ist, wobei in der Bodenplatte ein von der Magnetbandkassette quer zur Einschubrichtung verschiebbares Schiebeelement mit seitlichen Steuerkeilen gelagert ist, und die Schwenkelemente hat, mit denen die Arretiereinrichtungen in die Spulennaben verschwenkbar sind, **dadurch gekennzeichnet**, daß am quer verschiebbaren Schiebeelement (3) für jede Spulennabe (26, 27) eine Arretiereinrichtung (14, 15) angebracht ist, und daß am längsverschiebbaren Schieber (2) Steuerkanten (18, 19; 20, 21) angeordnet sind, die bei einseitig ausgelenktem Schiebeelement (3) und bei einer Längsverschiebung des Schiebers (2) an einem an einem Betätigungselement der Arretiereinrichtungen (14, 15) abstehenden Schwenkzapfen (12, 13) angreifen und dadurch die Arretiereinrichtungen (14, 15) verschwenken.

2. Kassettenhalterung nach Anspruch 1, **dadurch gekennzeichnet**, daß das Betätigungselement der Arretiereinrichtungen (14, 15) jeweils eine Welle (16, 17) ist, die zu beiden Seiten der zugehörigen Arretiereinrichtung (14, 15) übersteht und an ihren beiden freien Enden radial abstehende Schwenkzapfen (12, 13) hat.

3. Kassettenhalterung nach Anspruch 2, **dadurch gekennzeichnet**, daß das quer verschiebbare Schiebeelement (3) in einer Aussparung der Bodenplatte (1) unter einer am längsverschiebbaren Schieber (2) abstehenden Auflagezunge (11) angeordnet ist, und daß an der Unterseite der Auflagezunge (11) die Steuerkanten (18, 19; 20, 21) angeordnet sind.

4. Kassettenhalterung nach einem der vorhergehenden Ansprüche, **dadurch gekennzeichnet**, daß an dem längsverschiebbaren Schieber (2) als Schrägflächen ausgebildete Zentrierelemente (7, 8) angeordnet sind, die in der Endposition des ausgefahrenen Schiebers (2) auf die Steuerkeile (9, 10) des Schiebeelements (3) auftreffen und dieses in eine Mittelposition verschieben.

5. Kassettenhalterung nach einem der vorhergehenden Ansprüche, **dadurch gekennzeichnet**, daß in der Mittelposition des Schiebeelements (3) die Steuerkanten (18, 19; 20, 21) wirkungslos sind.

6. Kassettenhalterung nach einem der vorhergehenden Ansprüche, **dadurch gekennzeichnet**, daß die Kassettenhalterung ein Einschub ist, der an seiner Bodenplatte (1) Einrichtungen hat, mit denen er in ein Behältergehäuse einschiebbar und mit diesem verbindbar ist.

## Claims

1. A cassette holder for magnetic tape cassettes insertable in the longitudinal direction, which has locking means that engage in the reel hubs of the magnetic tape cassettes and are aligned in the insertion direction, and a base plate on which there is mounted a lockable slider that is arranged to be extended by means of a spring, thus taking the magnetic tape cassettes into a removal position, a sliding element having lateral control wedges and displaceable by the magnetic tape cassette transversely to the insertion direction being mounted in the base plate, and which cassette holder has pivoting elements with which the locking means can be pivoted into the reel hubs, characterized in that for each reel hub (26, 27) a locking means (14, 15) is mounted on the transversely displaceable sliding element (3), and on the longitudinally displaceable slider (2) there are arranged control edges (18, 19; 20, 21) which, with the sliding element (3) displaced to one side and on longitudinal displacement of the slider (2), act on a pivoting member (12, 13) projecting from an actuating element of the locking means (14, 15) and thereby pivot the locking means (14, 15).

2. A cassette holder according to claim 1, characterized in that the actuating element of each locking means (14, 15) is a respective shaft (16, 17) which projects from both sides of the associated locking means (14, 15) and has at its two free ends radially projecting pivoting members (12, 13).

3. A cassette holder according to claim 2, characterized in that the transversely displaceable sliding element (3) is arranged in a recess of the base plate (1) below a supporting tongue (11) projecting from the longitudinally displaceable slider (2), and the control edges (18, 19; 20, 21) are arranged on the underside of the supporting tongue (11).

4. A cassette holder according to one of the preceding claims, characterized in that centring elements (7, 8) in the form of inclined faces are arranged on the longitudinally displaceable slider (2), which elements in the end position of the extended slider (2) meet the control wedges (9, 10) of the sliding element (3) and displace the latter into a central position.

5. A cassette holder according to one of the preceding claims, characterized in that in the central position of the sliding element (3) the control edges (18, 19; 20, 21) are ineffective.

6. A cassette holder according to one of the preceding claims, characterized in that the cassette holder is an insert, which on its base plate (1) has means with which it is arranged to be inserted in a container housing and be connected thereto.

## Revendications

1. Porte-cassette pour des cassettes à bande magnétique à introduire selon la direction longitudinale, qui possède des organes de verrouillage venant en prise dans les moyeux de bobine des cassettes à bande magnétique et s'alignant selon la direction d'introduction ainsi qu'une plaque de Fond sur laquelle est porté un coulisseau qui peut se verrouiller et, au moyen d'un ressort, amener les cassettes à bande magnétique en position de saisie, dans lequel sur la plaque de fond est porté un élément coulissant qui peut coulisser transversalement par rapport à la direction d'introduction de la cassette à bande magnétique et qui contient les éléments de pivotement au moyen desquels les organes de verrouillage peuvent pivoter dans les moyeux de bobines, caractérisé par le fait que sur l'élément coulissant (3) qui peut coulisser transversalement, un organe de verrouillage (14, 15) est rapporté pour chaque moyeu de bobine (26, 27) et que sur le coulisseau (2) qui peut coulisser longitudinalement sont disposées des arêtes de commande (18, 19; 20, 21) qui, l'élément coulissant (2) ayant été dévié latéralement, et lors d'un coulissement longitudinal du coulisseau (2), viennent en prise sur un téton de pivotement (12, 13) qui saille sur un élément de manoeuvre des organes de verrouillage (14, 15) et Font de ce fait pivoter les organes de verrouillage (14, 15).

2. Porte-cassette selon la revendication 1, caractérisée par le fait que l'élément de manoeuvre des organes de verrouillage (14, 15) est chaque fois un arbre (16, 17) qui dépasse des deux côtés de l'organe de verrouillage correspondant (14, 15) et comporte à ses deux extrémités libres un téton de pivotement (12, 13) qui saille radialement.

3. Porte-cassette selon la revendication 2, caractérisée par le fait que l'élément coulissant (3) qui peut coulisser transversalement est disposé dans un évidement de la plaque de fond (1), sous une languette de pose (11) qui dépasse sur le coulisseau (2) qui peut coulisser longitudinalement et qu'à la face inférieure de la languette pose (11) sont disposées les arêtes (18, 19; 20, 21).

4. Porte-cassette selon la revendication précédente, caractérisée, par le fait que sur le coulisseau (2) qui peut coulisser longitudinalement sont disposés des éléments de centrage (7, 8) qui ont la forme de surfaces obliques, qui, dans la position d'extrémité du coulisseau en extension (2), rencontrent les coins de commande (9, 10) de l'élément coulissant (3) et font coulisser celui-ci en position médiane.

5. Porte-cassette selon une des revendications précédentes, caractérisée, par le fait que dans la position médiane de l'élément coulissant (3) les arêtes de commande (18, 19; 20, 21) sont sans effet.

6. Porte-cassette selon une des revendications précédentes, caractérisée, par le fait que le porte-cassette est un tiroir qui comporte sur sa plaque de fond (1) des disposition avec lesquels il peut s'enfiler dans un boîtier de récipient et être relié à celui-ci.
